(19) Europäisches Patentamt / European Patent Office / Office européen des brevets

(11) **EP 4 660 515 A1**

(12) **EUROPEAN PATENT APPLICATION**

(43) Date of publication:
**10.12.2025** Bulletin 2025/50

(21) Application number: **25177046.7**

(22) Date of filing: **16.05.2025**

(51) International Patent Classification (IPC):
**F17C 5/00** *(2006.01)* **F17C 5/06** *(2006.01)*

(52) Cooperative Patent Classification (CPC):
**F17C 5/06; F17C 5/007;** F17C 2205/0142;
F17C 2205/0335; F17C 2221/012; F17C 2223/0123;
F17C 2223/036; F17C 2225/0123; F17C 2225/036;
F17C 2227/046; F17C 2250/034; F17C 2250/043;
F17C 2250/0636; F17C 2260/025; F17C 2265/065;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.06.2024 JP 2024093199**

(71) Applicant: **TOYOTA JIDOSHA KABUSHIKI
KAISHA**
**Toyota-shi, Aichi-ken 471-8571 (JP)**

(72) Inventor: **YAMAMOTO, Shota**
**Toyota-shi 471-8571 (JP)**

(74) Representative: **J A Kemp LLP**
**80 Turnmill Street**
**London EC1M 5QU (GB)**

(54) **HYDROGEN FILLING METHOD AND HYDROGEN SUPPLY APPARATUS**

(57)    To efficiently perform hydrogen filling according to the form of a movable body by the use of a hydrogen supply apparatus provided with nozzles, in a method of filling at least one movable body with hydrogen from a hydrogen supply apparatus, said at least one movable body being provided with a tank system that has receptacles and that is in such a manner that hydrogen conduits on a downstream side of the receptacles come together, the hydrogen supply apparatus being provided with hydrogen supply lines and nozzles that are provided at the heads of the hydrogen supply lines, the hydrogen supply apparatus is configured to be able to perform first and second filling controls, the first filling control being a hydrogen filling control to be performed when the nozzles are connected to the receptacles of the tank system, the second filling control being a hydrogen filling control to be performed when one of the nozzles is connected to one of the receptacles of the tank system, the method including: after the nozzles are connected to some of the receptacles of said at least one movable body and before performing the first or second filling control, performing first prefilling with hydrogen via one of the nozzles; and when pressure in rest of the hydrogen supply lines increases after the first prefilling, performing the first filling control, the rest of the hydrogen supply lines being connected to the other nozzles via which no first prefilling is performed.

**Fig. 1**

receptacle    hydrogen conduit    tank    tank    tank

(52) Cooperative Patent Classification (CPC): (Cont.)
 F17C 2270/0105; F17C 2270/0139;
 F17C 2270/0171; F17C 2270/0176;
 F17C 2270/0178

**Description**

FIELD

The present disclosure relates to methods of filling movable bodies with hydrogen, and hydrogen supply apparatuses therefor.

BACKGROUND

A hydrogen station (hydrogen supply apparatus) receives, for example, tank information such as the volume of hydrogen tanks that are installed in a hydrogen supply destination device (e.g., a movable body such as a vehicle) by connecting a nozzle that is provided for the station to a receptacle (including hydrogen filling ports) of the hydrogen supply destination device. In such a situation, as disclosed in patent literature 1, there may be a plurality of nozzles on a hydrogen station side, and in addition, a hydrogen supply destination device may be provided with a plurality of receptacles. If so, it cannot be determined whether a plurality of nozzles are each connected to a plurality of receptacles of one hydrogen supply destination device or receptacles of different hydrogen supply destination devices. Due to difference in the connection form like the above, an appropriate hydrogen filling pattern cannot be selected, and the filling may not become efficient.

CITATION LIST

Patent Literature

Patent Literature 1: JP 2023-108244 A1

SUMMARY

Technical Problem

For more details, see the following.

A movable body (such as a vehicle and a ship) using hydrogen as one of fuels by the use of a fuel cell, a hydrogen engine, or the like is provided with a tank system including tanks to store hydrogen. Examples of such a tank system include the following.

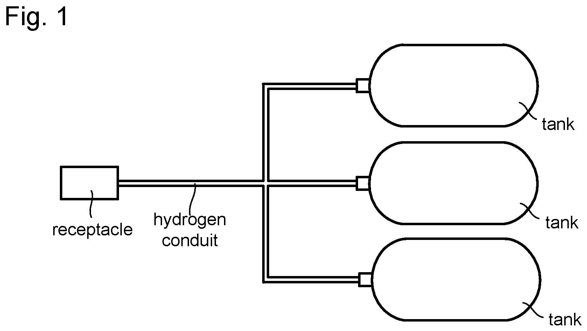

Typically, a vehicle of a size as an ordinary passenger car includes one feeding port (receptacle), and one or a plurality of tanks that communicate with a hydrogen conduit extending from the receptacle as shown in FIG. 1. In this description, such a tank system may be referred to as an S tank system.

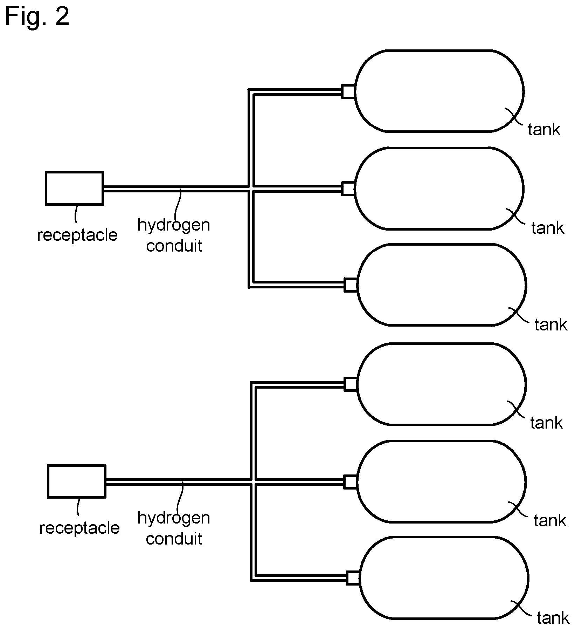

In contrast, a truck, a bus, or a large passenger car of some type may include a plurality of tanks of large volumes. If so, such a vehicle may include two receptacles in view of improvement in hydrogen filling efficiency. If so, for this, the following tank system is provided: receptacles communicate with respective tanks or respective groups of tanks (the hydrogen conduits from the receptacles are independent) as shown in FIG. 2. In this tank system, each group of a receptacle and (a) hydrogen tank(s) is independent, and filling controls suitable for each group may be performed. Therefore, this tank system can be also considered as an S tank system.

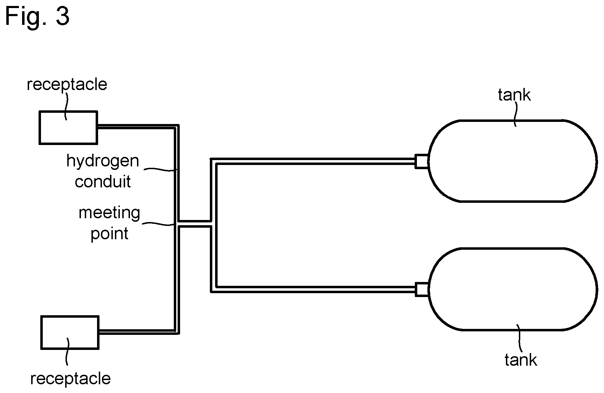

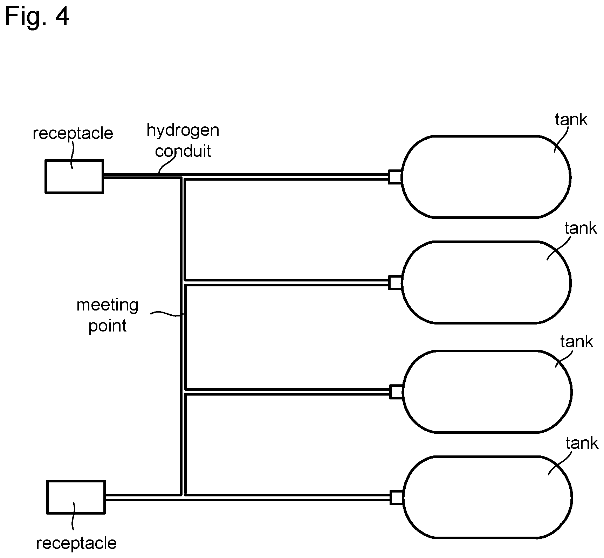

In contrast, as shown in FIGS. 3 and 4, there is a tank system in such a manner that the hydrogen conduits extending from respective two receptacles come together at a meeting point to thereafter communicate with each of a plurality of tanks. In this description, such a tank system may be referred to as an M tank system.

For realizing efficient hydrogen filling, a hydrogen supply apparatus is provided with a plurality of hydrogen supply lines, and nozzles disposed at the heads of the lines, and is configured in such a manner that hydrogen can be simultaneously supplied via the plurality of the nozzles.

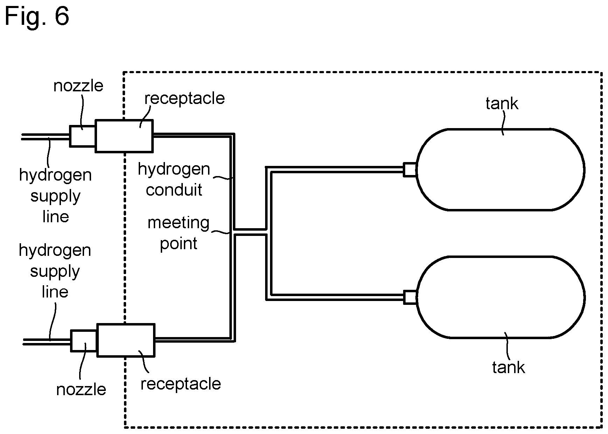

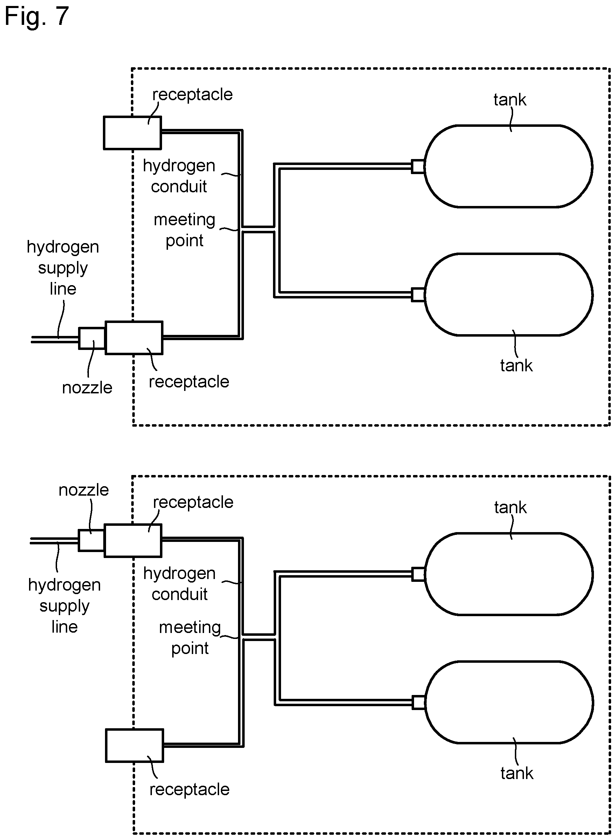

Here, for example, the following two cases are considered: the case where two nozzles are connected to the receptacles of an M tank system in one vehicle as shown in FIG. 6; and the case where two respective nozzles are separately connected to one receptacle of an M tank system in one of two vehicles, and one receptacle of an M tank system in the other of the vehicles as shown in FIG. 7. On a hydrogen supply apparatus side, it is recognized that two nozzles are connected, but it cannot be distinguished whether these two nozzles are connected to one M tank system or separately to two respective M tank systems. Because the hydrogen supply control for the case where two nozzles are connected to one M tank system is different from that for the case where two nozzles are separately connected to two respective M tank systems, both the cases are necessary to be distinguished. That is, it is considered that when respective nozzles are connected to two vehicles of M tank systems, it is erroneously recognized that one M tank system is to be filled with hydrogen via two nozzles so that filling efficiency is worse and the filling time gets longer than the case where the filling is performed at the filling speed when one nozzle is connected.

Generally, communications are done between a vehicle and a hydrogen supply apparatus before hydrogen filling, and some pieces of vehicle information are transmitted to the hydrogen supply apparatus side. Therefore, it is possible to provide, with a hydrogen supply apparatus, information on whether a vehicle uses an M tank system or an S tank system in advance. This is however not enough to avoid the aforementioned erroneous recognition. **In** contrast, vehicle information of more than some pieces is considered as information by the use of which a particular vehicle can be identified, and care must be taken to handle such information in the same manner as personal information. Thus, such information should not be always transmitted.

With the foregoing problems in view, an object of the present disclosure is to efficiently perform hydrogen filling according to the form of a movable body by the use of a hydrogen supply apparatus that is provided with a plurality of nozzles.

Solution to Problem

The present application discloses a method of filling at least one movable body with hydrogen from a hydrogen supply apparatus, said at least one movable body being provided with a tank system that has receptacles and that is in such a manner that hydrogen conduits on a downstream side of the receptacles come together, the hydrogen supply apparatus being provided with hydrogen supply lines and nozzles that are provided at heads of the hydrogen supply lines, wherein the hydrogen supply apparatus is configured to be able to perform first and second filling controls, the first filling control being a hydrogen filling control to be performed when the nozzles are connected to the receptacles of the tank system, the second filling control being a hydrogen filling control to be performed when one of the nozzles is connected to one of the receptacles of the tank system, the method comprising: after the nozzles are connected to some of the receptacles of said at least one movable body and before performing the first or second filling control, performing first prefilling with hydrogen via one of the nozzles; and when pressure in rest of the hydrogen supply lines increases after the first prefilling, performing the first filling control, the rest of the hydrogen supply lines being connected to other of the nozzles via which no first prefilling is performed.

The hydrogen filling method may further comprise: after the first prefilling and before performing the first or second filling control, performing second prefilling with hydrogen via all the connected nozzles; and calculating a value by dividing a sum of a hydrogen filling amount in the first prefilling and a hydrogen filling amount in the second prefilling by a volume of tanks included in one of said at least one movable body, and performing the first filling control when finding a pressure increase corresponding to the hydrogen filling amount in the first prefilling as a result of the calculation.

The present application discloses a method of filling at least one movable body with hydrogen from a hydrogen supply apparatus, said at least one movable body being provided with a tank system that has receptacles and that is in such a manner that hydrogen conduits on a downstream side of the receptacles come together, the hydrogen supply apparatus being provided with hydrogen supply lines and nozzles that are provided at heads of the hydrogen supply lines, wherein the hydrogen supply apparatus is configured to be able to perform first and second filling controls, the first filling control being a hydrogen filling control to be performed when the nozzles are connected to the receptacles of the tank system, the second filling control being a hydrogen filling control to be performed when one of the nozzles is connected to one of the receptacles of the tank system, the method comprising: after detecting that the nozzles are connected to some of the receptacles of said at least one movable body, performing first prefilling with hydrogen via one of the nozzles and second prefilling with hydrogen via all the connected nozzles; and when finding no pressure increase corresponding to a hydrogen filling amount in the first prefilling, performing the second filling control.

The present application discloses a hydrogen supply apparatus comprising: hydrogen supply lines; nozzles that are provided at heads of the hydrogen supply lines; and a control unit that controls hydrogen filling, wherein the control unit can perform first and second filling controls when at least one movable body is filled with hydrogen, said at least one movable body being provided with a tank system that has receptacles and that is in such a manner that hydrogen conduits on a downstream side of the receptacles come together, the first filling control being a hydrogen filling control to be performed when the nozzles are connected to the receptacles of the tank system, the second filling control being a hydrogen filling control to be performed when one of the nozzles is connected to one of the receptacles of the tank system, and the control unit performs a control comprising: detecting connection of at least two of the nozzles to at least two of the receptacles of said at least one movable body; performing first prefilling with hydrogen via one of the connected nozzles; after the first prefilling, measuring a pressure increase in rest of the hydrogen supply line(s) that is/are connected to other of the nozzles via which no first prefilling is performed; and determining to perform the first filling control when finding the pressure increase in said measuring.

The hydrogen supply apparatus may be configured in such a manner that the control by the control unit further comprises, after said measuring, performing second prefilling with hydrogen via all the nozzles, and in said determining, carrying out an operation to acquire a pressure value that is obtained from a value obtained by dividing a sum of a hydrogen filling amount in the first prefilling and a hydrogen filling amount in the second prefilling by a volume of tanks included in one of said at least one movable body, and when finding a pressure increase corresponding to the hydrogen filling amount in the first prefilling in the pressure value, determining to perform the first filling control. Advantageous Effects

In a hydrogen supply apparatus comprising a plurality of nozzles, connection of a movable body comprising the following tank system can be determined by a pressure increase due to prefilling: the tank system includes a plurality of receptacles and a plurality of tanks, and in the tank system, hydrogen conduits come together on the downstream side of the plurality of the receptacles and branch on a further downstream side of the receptacles to lead to the tanks. This allows an optimum filling control without mistaking connection of a plurality of the nozzles to one movable body for connection of a plurality of the nozzles to two or more movable bodies, and vice versa, and can prevent the filling time from being long.

BRIEF DESCRIPTION OF DRAWINGS

Fig. 1 illustratively shows one example of S tank systems;
FIG 2. illustratively shows another example of S tank systems;
Fig. 3 illustratively shows one example of M tank systems;
FIG 4. illustratively shows another example of M tank systems;
FIG. 5 schematically shows a movable body (vehicle 1);
FIG. 6 illustratively shows a scene where two nozzles are connected to one M tank system;
FIG. 7 illustratively shows a scene where two nozzles are separately connected to one and the other of two M tank systems;
FIG. 8 illustratively shows a tank system 20;
FIG. 9 illustratively shows a hydrogen supply apparatus 50;
FIG. 10 illustratively shows configuration of the control unit 56;
FIG. 11 illustratively shows a flow of a hydrogen filling method (hydrogen filling control) S10;
FIG. 12 illustratively shows an example of connecting two nozzles to one M tank system; and
FIG. 13 illustratively shows an example of separately connecting two nozzles to two M tank systems.

DESCRIPTION OF EMBODIMENTS

1. Movable Body

First, a movable body that is a device to which hydrogen can be supplied by connection to a hydrogen supply apparatus is described. Here, a vehicle is described as one form of the movable body. The forms of the movable body to which the present disclosure is applicable are not limited to vehicles.

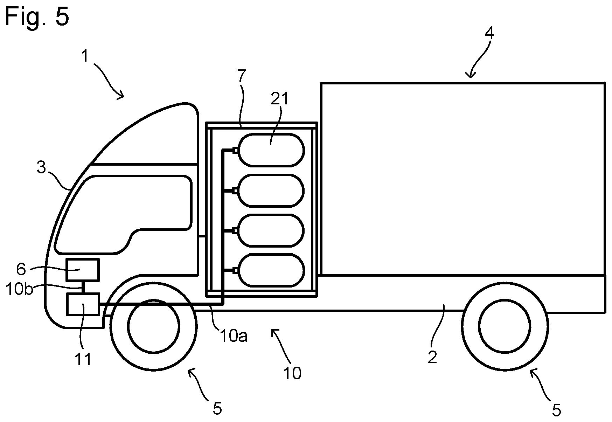

FIG. 5 shows a schematically outlined vehicle 1 with tanks 21 loaded thereinto. In a tank system 20, only the tanks 21 is shown in FIG. 5 because the tank system 20 will be described later with reference to other drawings. The vehicle 1 according to the present embodiment is a large vehicle (truck), and is provided with a chassis 2, a cab 3 disposed on the front portion of the chassis 2, a cargo area 4 disposed on the rear portion of the chassis 2, wheel parts 5 provided at the lower portion of the chassis 2, an electric motor 6 to drive the vehicle 1, and a fuel cell unit 10. Here, the truck is shown as a large vehicle, whereas the present disclosure is not limitedly applicable to trucks, but is also applicable to busses etc. Moreover, the present disclosure is not limitedly applicable to large vehicles, but is also applicable to ordinary passenger cars.

The fuel cell unit 10 is configured to have a fuel cell 11, the tanks 21, an air obtaining means (not shown), and a hydrogen tank housing case 7. This allows hydrogen to be supplied from the tanks 21 housed in the tank housing case 7 through a hydrogen supply pipe 10a to the fuel cell 11, and allows air to be supplied from the air obtaining means (not shown) to the fuel cell 11. The fuel cell 11 generates electricity by reaction of the hydrogen with the supplied air (oxygen). The generated electric power is supplied to the electric motor 6 via an electric wire 10b to drive the electric motor 6, whereby the vehicle 1 acquires a driving force.

The above way of driving the electric motor 6 by the use of the fuel cell 11 that uses hydrogen as a fuel in the vehicle 1 is as known.

Further, as described later, in the vehicle 1 according to the present embodiment, the tank system 20 is disposed: the tank system 20 can receive the hydrogen which is supplied from a hydrogen supply apparatus installed in a hydrogen station, and preserve the hydrogen in the tanks 21.

1.1. Tank System

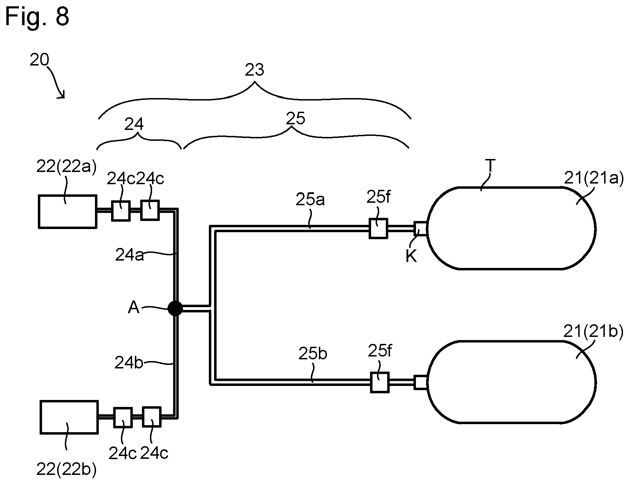

As described above, the vehicle 1 according to the present embodiment (hydrogen supply destination device) is provided with the tank system 20, which is an apparatus for preserving hydrogen. Fig. 8 schematically shows the configuration of the tank system 20. The tank system 20 according to the present embodiment is the above-described M tank system. Here, the tank system 20 is based on the example shown in FIG. 3, but may be an M tank system based on the example shown in FIG. 4.

Hereinafter the forms will be each described.

As is seen from FIG. 8, the tank system 20 according to the present embodiment is provided with the tanks 21, receptacles 22, and a conduit 23.

[Tanks]

The tanks 21 are containers to keep hydrogen preserved. Hydrogen can be supplied from the tanks 21 to the fuel cell 11.

The specific structure of the tanks 21 is not particularly limited. Any known tanks usable as hydrogen tanks can be applied to the tanks 21. Typically, a hydrogen tank includes a tank body T that is the portion to preserve hydrogen, and a spud K that functions as a port for hydrogen at the tank body T and to which a pipe is connected.

In this embodiment (M tank system), a plurality of the tanks 21 are provided. Each of the tanks 21 can be filled with hydrogen. Here, an example of disposing the two tanks 21 is shown. In order to distinguish these tanks 21, the tanks 21 are denoted by the signs 21a and 21b, respectively. The number of the tanks is not limited to this, and three or more tanks may be disposed.

[Receptacles]

By connecting one of the receptacles 22 to a nozzle 54a of a hydrogen supply apparatus 50 described later, the conduits of the hydrogen supply apparatus 50 and the tank system 20 communicate, which leads to the supply of the hydrogen from the hydrogen supply apparatus 50 to the tanks 21.

The specific shapes of the receptacles 22 are not particularly limited. Receptacles in any known form is usable.

**In** this embodiment, the plural (e.g., two) receptacles 22 are disposed, and are each provided with a downstream fitting. Here, an example of including the two receptacles 22 is shown. In order to distinguish these receptacles 22, the receptacles 22 are denoted by the signs 22a and 22b, respectively. The number of the included receptacles 22 may be at least two, three or four.

The present disclosure may be applied to both the forgoing case where one receptacle is provided with one downstream fitting, and a case where a plurality of the receptacles are provided with one downstream fitting as long as at least a plurality of the receptacles are provided.

[Conduit]

The conduit 23 is the conduit via which the receptacles 22 and the tanks 21 communicate, and is configured in such a manner that hydrogen can flow therein. **In** this embodiment, the conduit 23 has a receptacle side conduit 24 disposed on the receptacles 22 side, and a tank side conduit 25 disposed on the tanks 21 side.

<Receptacle Side Conduit>

The receptacle side conduit 24 includes a conduit 24a formed of a pipe with one end connected to the receptacle 22a, and a conduit 24b formed of a pipe with one end connected to the receptacle 22b. The other ends of the conduits 24a and 24b are configured in such a manner that the conduits come together at a meeting point A.

In other words, the hydrogen that has flown via the receptacle 22a, and the hydrogen that has flown via the receptacle 22b meet at the meeting point A. **In** the present embodiment, the meeting point A is formed of a pipe fitting. The pipes of the conduits 24a and 24b are connected to each other via the pipe fitting.

Because of the property of the conduits 24a and 24b of being connected to the receptacles 22a and 22b, the conduit cross-sectional areas of the conduits 24a and 24b are smaller (the flow resistance per unit length is higher whereby the pressure loss is heavier) than the conduit cross-sectional area of the tank side conduit 25 (the conduit cross-sectional areas of the conduits 25a and 25b, which are formed of pipes).

Preferably, the conduits 24a and 24b are each provided with two check valves 24c (valves that allow the flow in the direction from the receptacles side toward the meeting point, and that regulate the opposite flow). If so, backwards flow can be doubly prevented to aim to improve safety.

<Tank Side Conduit>

The tank side conduit 25 is from the meeting point A, and is connected to each of the tanks 21A on the downstream side of the meeting point A. That is, the tank side conduit 25 has the conduit 25a formed of the pipe from the meeting point A to the tank 21a, and the conduit 25b formed of the pipe from the meeting point A to the tank 21b. In this embodiment, the pipes of the conduits 25a and 25b are connected via the pipe fitting.

The conduit cross-sectional areas of the conduits 25a and 25b are larger (the flow resistance per unit length is lower whereby the pressure loss is smaller) than the conduit cross-sectional area of the receptacle side conduit 24 (including the conduits 24a and 24b).

Preferably, the conduits 25a and 25b are each provided with a check valve 25f (a valve that allows the flow in the direction from the meeting point toward the hydrogen tank, and that regulates the opposite flow). If so, backwards flow can be prevented to aim to improve safety.

2. Configuration of Hydrogen Supply Apparatus

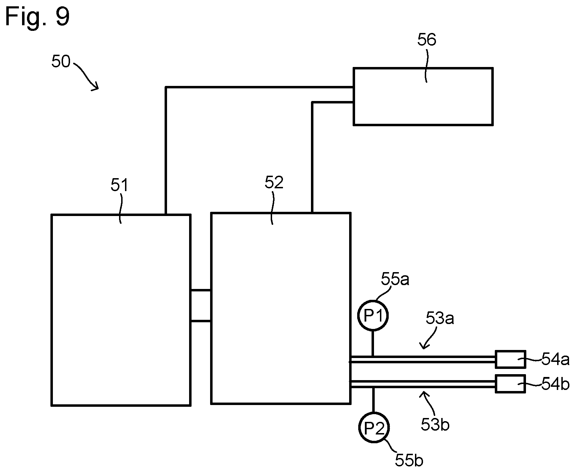

FIG. 9 illustratively shows the configuration of the hydrogen supply apparatus 50, which is to supply hydrogen to the tank system 20.

The hydrogen supply apparatus 50 is provided with an accumulator 51 in which hydrogen is sealed, a compressor 52 to compress (pressurize) the hydrogen released from the accumulator 51 to the pipe, hydrogen supply lines 53 formed of pipes that are to supply the pressurized hydrogen from the compressor 52 to the tank system 20 of the vehicle 1, and a control unit 56 that controls the supply of the hydrogen. The hydrogen is supplied by connecting nozzles 54 provided at the heads of the hydrogen supply lines 53 to the receptacles 22 provided in the tank system 20 of the vehicle 1, and by the control by the control unit 56.

The hydrogen supply apparatus according to the present disclosure is provided with a plurality of the hydrogen supply lines 53. In this embodiment, a first supply line 53a and a second supply line 53b are provided. A nozzle 54a (first nozzle) is disposed at the head of the first supply line 53a, and a nozzle 54b (second nozzle) is disposed at the head of the second supply line 53b.

The first supply line 53a is provided with a first pressure sensor 55a that can measure the pressure at the nozzle 54a in this line, and the second supply line 53b is provided with a second pressure sensor 55b that can measure the pressure at the nozzle 54b in this line.

The control unit 56 carry out operations by acquiring information on whether the nozzles 54a and 54b are connected to the receptacles 22, information on the pressures in the pipes measured by the pressure sensors 55a and 55b provided in the hydrogen supply apparatus 50, and information acquirable from the vehicle 1 to determine the connection conditions of the plurality of the nozzles as described later, and carries out the operation of a hydrogen filling control.

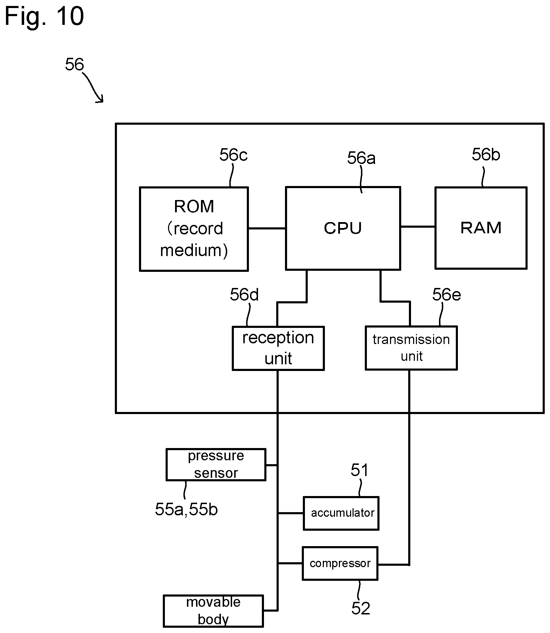

As schematically shown in FIG. 10, the control unit 56 includes a CPU (Central Processing Unit) 56a that is a processor and that carries out operations, a RAM (Random Access Memory) 56b that operates as a work area, a ROM (Read-Only Memory) 56c that operates as a record medium, a reception unit 56d that is an interface via which the control unit 56 receives information by wire or wireless, and a transmission unit 56e that is an interface via which the control unit 56 transmits information to the outside by wire or wireless.

Therefore, the control unit 56 is configured to receive information by connection of the pressure sensors 55a and 55b, each device of the hydrogen supply apparatus 50, and the movable body to the reception unit 56d, and to transmit control signals according to hydrogen filling patterns to each device of the hydrogen supply apparatus 50 by connection of each device of the hydrogen supply apparatus 50 to the transmission unit 56e.

Stored in the control unit 56 is the programs of carrying out operations of, and operating: processing of information acquired from the pressure sensors 55a and 55b, each device of the hydrogen supply apparatus 50, the vehicle 1, etc., and determination of a hydrogen prefilling timing, and the number of the connected vehicle 1; decision of a suitable hydrogen filling pattern (including the filling speed and the pressure rise rate); and start, stop, or the like of hydrogen filling. In the control unit 56, the CPU 56a, the RAM 56b and the ROM 56c as hardware resources cooperate with the programs as computer programs. Specifically, the CPU 56a executes, by the RAM 56b that operates as a work area, computer programs recorded in the ROM 56c whereby an appropriate hydrogen fulling mode is realized by the required procedures described later. The information acquired or created by the CPU 56a is stored in the RAM 56b. In addition, one may provide the control unit 56 with a separate record medium inside or outside the control unit 56 to record programs and various data in this separate record medium.

The control unit 56 as described above can be configured by a computer, and the programs can be configured by computer programs.

In this embodiment, the hydrogen supply apparatus as described above is shown as an example. The hydrogen supply apparatus can be in any other configuration but is not limited to the above. For example, the hydrogen supply apparatus may be in the configuration including a first accumulator, a first compressor, a second accumulator, a second compressor, and a third accumulator; or may be also provided with a refrigerator (installation to cool hydrogen) downstream the last accumulator or compressor.

### 3. Hydrogen Filling Method and Hydrogen Filling Control

#### 3.1. Example 1

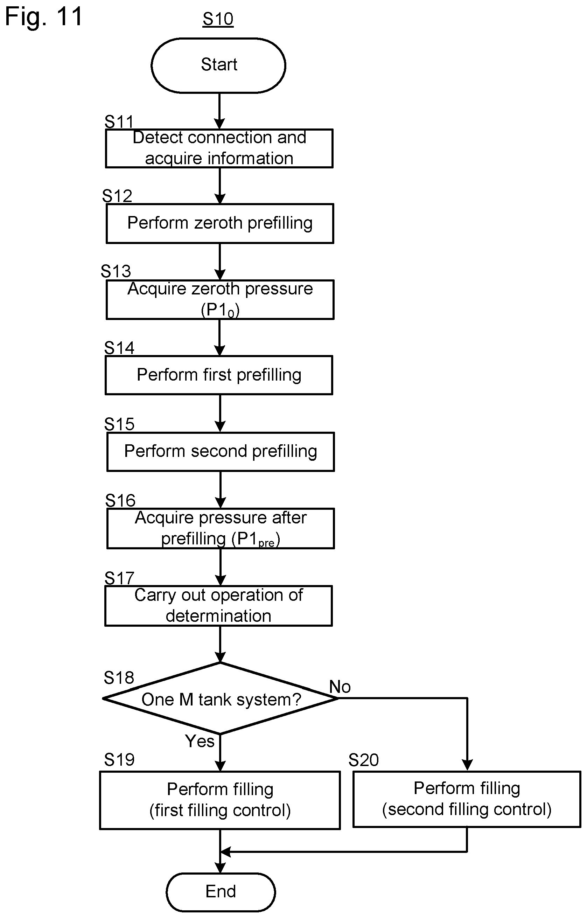

FIG. 11 shows the flow of a hydrogen filling method S10 according to one example. As can be seen from FIG. 11, the hydrogen filling method S10 comprises steps S11 to S20. Hereinafter each of the steps will be described. The control unit 56 controls the hydrogen supply apparatus 50 by carrying out operations by the use of the programs that are to realize the respective steps whereby hydrogen filling is performed by the use of the hydrogen supply apparatus 50.

Here, in the control by the use of the hydrogen filling method and the hydrogen supply apparatus, allowed to be performed are: a first filling control that is a hydrogen filling control when a plurality of the nozzles are connected to a plurality of the receptacles of one M tank system; and a second filling control that is a hydrogen filling control when a nozzle is connected to at least one receptacle of the M tank system. One can determine which of these filling controls is carried out. The second filling control is also applicable, for example, when nozzles are connected to two receptacles of a movable body that is provided with a plurality of (three or four) receptacles, or when nozzles are connected to three receptacles out of four receptacles.

#### 3.1.1. Step S11

In the step S11, it is detected that a plurality of the nozzles (in this example, the first nozzle 54a and the second nozzle 54b) of the hydrogen supply apparatus 50 are connected to some receptacles (irrespective of the number (one or two) of the movable bodies), respectively. This detection can be done by transmitting signals indicating the foregoing from the sensors provided at the first nozzle 54a and the second nozzle 54b to the control unit 50.

Further, in the step S11, acquirable information is acquired from the vehicle 1. This information includes: the total volume (V) of the tanks provided in the vehicle 1; and information that the vehicle 1 uses an M tank system (or S tank system). The information can be acquired by wireless communication between the hydrogen supply apparatus 50 and the vehicle 1. When information indicating that the vehicle uses an S tank system is acquired in the step S11, this control is ended, and hydrogen filling for an S tank system is started.

#### 3.1.2. Step S12

In the step S12, hydrogen is supplied instantaneously (pulsingly) via both the first nozzle 54a and the second nozzle 54b as the zeroth prefilling.

### 3.1.3. Step S13

In the step S13, as the zeroth pressure, a pressure value is acquired from one of the pressure sensors 55a and 55b: from this one pressure sensor, a pressure value is to be acquired in the step S16 described later. In this example, a pressure value is acquired from the pressure sensor 55a, and is defined as $P1_0$.

Preferably, the timing of acquiring the pressure value is when several minutes have elapsed after hydrogen was supplied in the step S12. If so, pressure fluctuations in the system calm down so that the detection accuracy can be increased.

### 3.1.4. Step S14

In the step S14, as the first prefilling, hydrogen is supplied instantaneously (pulsingly) via either the first nozzle 54a or the second nozzle 54b. This filling can be performed under the same conditions as in the step S12. In this example, the first prefilling shall be performed via the second nozzle 54b only.

The hydrogen filling amount at this time is defined as M1.

### 3.1.5. Step S15

In the step S15, hydrogen is supplied instantaneously (pulsingly) via both the first nozzle 54a and the second nozzle 54b as the second prefilling. This filling can be performed under the same conditions as in the step S12.

The hydrogen filling amount at this time is defined as M2.

### 3.1.6. Step S16

In the step S16, after the second prefilling in the step S15, a pressure value is acquired from the pressure sensor (pressure sensor 55a in this example) on the side of the nozzle via which the first prefilling was not performed in the step S14 (first nozzle 54a in this example). This pressure value is defined as $P1_{pre}$.

Preferably, the timing of acquiring the pressure value is when several minutes have elapsed after hydrogen was supplied in the step S15. If so, pressure fluctuations in the system calm down so that the detection accuracy can be increased.

### 3.1.7. Step S17

In the step S17, the operation of determining the connection form of the nozzles is carried out, which is specifically as follows.

Since hydrogen filling is performed via the second nozzle 54b only in the first prefilling of the step S14, the value of P1, which is the pressure in the hydrogen supply line on the side of the nozzle (first nozzle 54a in this example) via which no hydrogen filling was performed in the first prefilling (i.e. the pressure $P1_{pre}$ acquired in the step S16), shows a characteristic depending on the condition of the connection with the tank system.

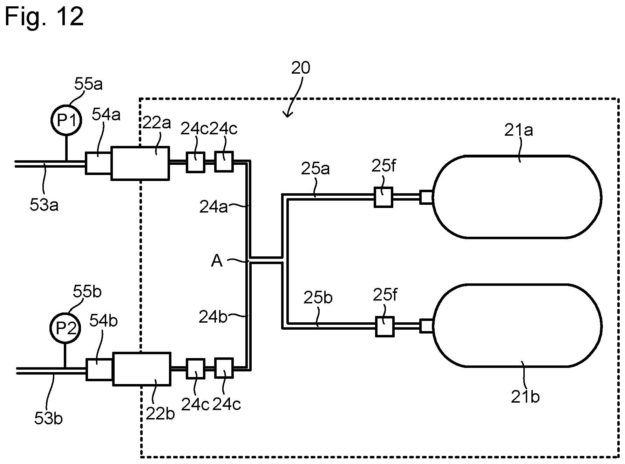

As shown in FIG. 12, when the first nozzle 54a and the second nozzle 54b are connected to the one tank system 20, hydrogen filling is performed via the second nozzle 54b only in the first prefilling, whereas the pressure measured by the pressure sensor 55a on the side of the first nozzle 54a connected to the same M tank system 20 also increases.

Specifically, it can be determined that both the first nozzle 54a and the second nozzle 54b are connected to the one M tank system 20 if $P1_{pre}$ takes a value close to the result of the following formula (1) (closer to the formula (1) than the formula (2) described later):

$$(1): P1_0 + (M1 + M2)/V$$

where $P1_0$ is the pressure acquired in the step S13, M1 is the hydrogen filling amount by the first prefilling in the step S14, M2 is the hydrogen filling amount by the second prefilling in the step S15, and V is the tank volume acquired in the step S11.

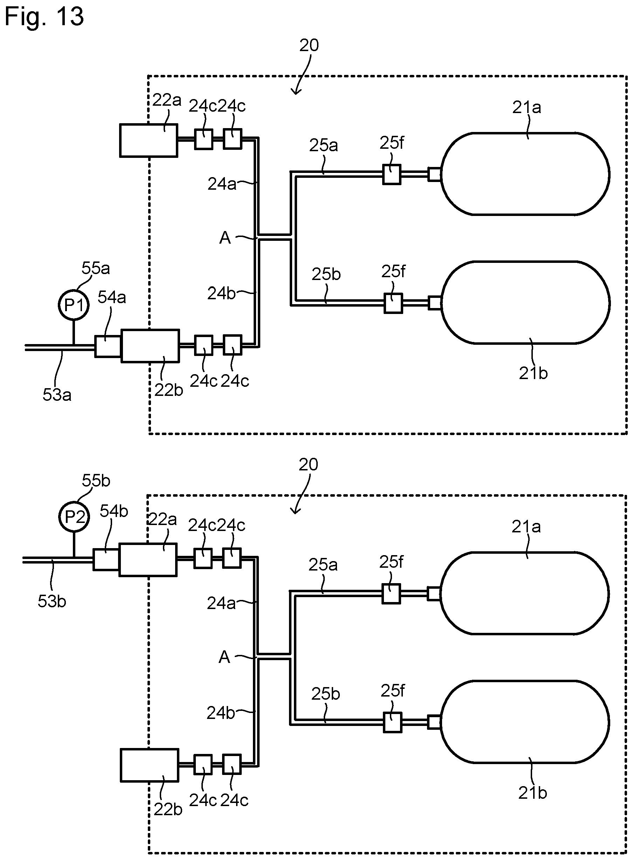

In contrast, as shown in FIG. 13, when the first nozzle 54a is connected to one of two tank systems 20 and the second nozzle 54b is connected to the other tank system 20, the pressure measured by the pressure sensor 55a on the side of the first nozzle 54a connected to the M tank system 20, which is different from the M tank system to which the second nozzle 54b is connected, does not increase since hydrogen filling is performed via the second nozzle 54b only in the first prefilling.

Specifically, it can be determined that the first nozzle 54a and the second nozzle 54b are connected to different M tank systems 20 if $P1_{pre}$ takes a value close to the result of the following formula (2) (closer to the formula (2) than the formula (1)):

$$(2): P1_0 + (M2/2)/V$$

where $P1_0$ is the pressure acquired in the step S13, M2 is the hydrogen filling amount by the second prefilling in the step S15, and V is the tank volume acquired in the step S11.

As described above, the connection condition of the two nozzles can be determined by determining which result of the formula (1) or (2) $P1_{pre}$, acquired in the step S16, is closer to.

### 3.1.8. Steps S18 to S20

In the step S18, it is determined which filling (first or second filling control) is performed based on the result of the operation of the determination in the step S17.

When it is determined that the two nozzles are connected to the one M tank system in the step S17, Yes is selected in the step S18, and in the step S19, the control to fill the one M tank system with hydrogen via the two nozzles (first filling control) is performed.

On the contrary, when it is determined that the two nozzles are connected separately to one and the other of the two M tank systems in the step S17, No is selected in the step S18, and in the step S20, the control to perform hydrogen filling when one nozzle is connected to an M tank system (second filling control) is performed.

### 3.2. Others

The specific example is shown above, whereas one of the features of the present disclosure is to perform prefilling only on the one side of the connected nozzles in the first prefilling described in the step 14, and to determine the connection condition based on the measurement value of the pressure on the side where the first prefilling is not performed on the hydrogen supply apparatus side. The present disclosure is satisfied as long as provided with this feature. For example, the present disclosure can be provided with the following hydrogen filling methods, and hydrogen filling controls according to these methods. The following are the other examples.

### 3.2.1. Example 2

In example 2, in the hydrogen filling method, after the first nozzle 54a and the second nozzle 54b of the hydrogen supply apparatus 50 are connected to the receptacles 22a and 22b of the vehicle and before hydrogen filling (first or second filling control) is performed, the first prefilling is performed via one of the first nozzle 54a and the second nozzle 54b (e.g., second nozzle 54b). The first prefilling is as described above.

When the pressure in the hydrogen supply line (e.g., first hydrogen supply line 53a) where the nozzle via which no first prefilling is performed (e.g., first nozzle 54a) is connected increases after the first prefilling, it is determined that the first nozzle 54a and the second nozzle 54b are connected to the one M tank system 20, and the first filling control is performed.

That is, in this example, the step S15 (second prefilling) is not performed, and when a pressure increase is acquired in the step S17, the first filling control (step S19) is performed without the step S18.

By this method carried out by the control unit 56, the hydrogen supply apparatus is controlled as follows.

As a connection detection step, it is detected that the first nozzle 54a and the second nozzle 54b are connected to the receptacles 22a and 22b of the vehicle 1.

As the first prefilling step, hydrogen prefilling is performed via one of the connected nozzles (e.g., second nozzle 54b).

As a pressure measurement step, measured after the first prefilling is the pressure increase in the hydrogen supply line (e.g., first hydrogen supply line 53a) where the nozzle via which no first prefilling is performed (e.g., first nozzle 54a) is connected.

As the step of determination and filling, after the foregoing pressure measurement, it is determined that the first nozzle 54a and the second nozzle 54b are connected to the one M tank system 20 when the pressure increases, and the first filling control is performed.

### 3.2.2. Example 3

In example 3, in the hydrogen filling method, in addition to example 2, after the first prefilling and before filling (first or second filling control), the following second prefilling, which is hydrogen prefilling via both the first nozzle 54a connected to the receptacle 22a, and the second nozzle 54b, is performed.

Next, the sum of the hydrogen filling amount in the first prefilling (M1) and the hydrogen filling amount in the second prefilling (M2) is dividing by the volume of the tanks provided in the vehicle to calculate a value. As a result of the calculation, if a pressure increase corresponding to the hydrogen filling amount in the first prefilling is found, it is determined that the first nozzle 54a and the second nozzle 54b are connected to the one M tank system 20, and the first filling control is performed.

By this method carried out by the control unit 56, the hydrogen supply apparatus is controlled as follows.

As the second prefilling step, after the pressure measurement after the first prefilling, hydrogen prefilling is performed via both the first nozzle 54a and the second nozzle 54b.

As the step of determination and filling, an operation is carried out to acquire the pressure value that is obtained from the value obtained by dividing the sum of the hydrogen filling amount in the first prefilling (M1) and the hydrogen filling amount in the second prefilling (M2) by the volume of the tanks provided in the vehicle 1. If a pressure increase corresponding to the hydrogen filling amount in the first prefilling is found in the pressure value, it is determined that the first nozzle 54a and the second nozzle 54b are connected to the one M tank system 20, and the first filling control is performed.

### 3.2.3. Example 4

In example 4, in the hydrogen filling method, after it is detected that the first nozzle 54a and the second nozzle 54b are connected to the receptacles 22a and 22b of the vehicle, the first prefilling that is hydrogen prefilling via one of a plurality of the nozzles (for example, second nozzle 54b) is performed.

Thereafter the second prefilling that is hydrogen prefilling via all the connected nozzles is performed. If no pressure increase corresponding to the hydrogen filling amount in the first prefilling is found, it is determined that one of the nozzles is connected to the M tank system, and the second filling control is performed.

4. Effects etc.

According to the present disclosure, it can be determined whether a plurality of the nozzles of the hydrogen supply apparatus are connected to one M tank system, or separate different M tank systems. When a conventional apparatus is used, the same vehicle information is transmitted by communication in a case where two nozzles are simultaneously connected to one vehicle into which an M tank system is installed, and in a case where respective nozzles are separately connected to one and the other of two vehicles into which an M tank system is each installed. Therefore, in both the cases, it is recognized in the hydrogen supply apparatus that filling with a predetermined amount of hydrogen may be performed via all the two nozzles (filling with half the amount of hydrogen may be performed via each of the nozzles), so that the filling speed gets slower particularly in the case where the nozzles are connected to two vehicles, respectively, and efficient filling cannot be performed. In contrast, according to the present disclosure, since appropriate determination is made first, filling efficiency appropriate for each scene can be secured.

Further, according to the present disclosure, it is not necessary to receive information inherent in a hydrogen supply destination device (e.g., a vehicle identification number, and dynamic information such as tank temperatures and tank pressures), and the condition can be determined according to the scene. Therefore, it is not necessary to handle inherent information, and it becomes unnecessary to manage personal information and to feel the concern about information leakage.

Reference Signs List

    1 vehicle (movable body)
    10 fuel cell unit
    20 tank system
    21 hydrogen tank
    22 receptacles
    23 conduit
    24 receptacle side conduit
    25 nozzle side conduit
    50 hydrogen supply apparatus
    51 accumulator
    52 compressor
    53 hydrogen supply line
    53a first hydrogen supply line
    53b second hydrogen supply line
    54 nozzles
    54a first nozzle
    54b second nozzle
    56 control unit

**Claims**

1. A method of filling at least one movable body with hydrogen from a hydrogen supply apparatus, said at least one movable body being provided with a tank system that has receptacles and that is in such a manner that hydrogen conduits on a downstream side of the receptacles come together, the hydrogen supply apparatus being provided with hydrogen supply lines and nozzles that are provided at heads of the hydrogen supply lines, wherein
the hydrogen supply apparatus is configured to be able to perform first and second filling controls, the first filling control being a hydrogen filling control to be performed when the nozzles are connected to the receptacles of the tank system, the second filling control being a hydrogen filling control to be performed when one of the nozzles is connected to one of the receptacles of the tank system, the method comprising:

    after the nozzles are connected to some of the receptacles of said at least one movable body and before performing the first or second filling control, performing first prefilling with hydrogen via one of the nozzles; and
    when pressure in rest of the hydrogen supply lines increases after the first prefilling, performing the first filling control, the rest of the hydrogen supply lines being connected to other of the nozzles via which no first prefilling is performed.

2. The hydrogen filling method according to claim 1, the method further comprising:

    after the first prefilling and before performing the first or second filling control, performing second prefilling with hydrogen via all the connected nozzles; and
    calculating a value by dividing a sum of a hydrogen filling amount in the first prefilling and a hydrogen filling amount in the second prefilling by a volume of tanks included in one of said at least one movable body, and performing the first filling control when finding a pressure increase corresponding to the hydrogen filling amount in the first prefilling as a result of the calculation.

3. A method of filling at least one movable body with hydrogen from a hydrogen supply apparatus, said at least one movable body being provided with a tank system that has receptacles and that is in such a manner that hydrogen conduits on a downstream side of the receptacles come together, the hydrogen supply apparatus being provided with hydrogen supply lines and nozzles that are provided at heads of the hydrogen supply lines, wherein
the hydrogen supply apparatus is configured to be able to perform first and second filling controls, the first filling control being a hydrogen filling control to be performed when the nozzles are connected to the receptacles of the tank system, the second filling control being a hydrogen filling control to be performed when one of the nozzles is connected to one of the receptacles of the tank system, the method comprising:

after detecting that the nozzles are connected to some of the receptacles of said at least one movable body, performing first prefilling with hydrogen via one of the nozzles and second prefilling with hydrogen via all the connected nozzles; and
when finding no pressure increase corresponding to a hydrogen filling amount in the first prefilling, performing the second filling control.

4. A hydrogen supply apparatus comprising:

hydrogen supply lines;
nozzles that are provided at heads of the hydrogen supply lines; and
a control unit that controls hydrogen filling, wherein
the control unit can perform first and second filling controls when at least one movable body is filled with hydrogen, said at least one movable body being provided with a tank system that has receptacles and that is in such a manner that hydrogen conduits on a downstream side of the receptacles come together, the first filling control being a hydrogen filling control to be performed when the nozzles are connected to the receptacles of the tank system, the second filling control being a hydrogen filling control to be performed when one of the nozzles is connected to one of the receptacles of the tank system, and
the control unit performs a control comprising:

detecting connection of at least two of the nozzles to at least two of the receptacles of said at least one movable body;
performing first prefilling with hydrogen via one of the connected nozzles;
after the first prefilling, measuring a pressure increase in rest of the hydrogen supply line(s) that is/are connected to other of the nozzles via which no first prefilling is performed; and
determining to perform the first filling control when finding the pressure increase in said measuring.

5. The hydrogen supply apparatus according to claim 4, wherein

the control by the control unit further comprises, after said measuring, performing second prefilling with hydrogen via all the nozzles, and
in said determining, carrying out an operation to acquire a pressure value that is obtained from a value obtained by dividing a sum of a hydrogen filling amount in the first prefilling and a hydrogen filling amount in the second prefilling by a volume of tanks included in one of said at least one movable body, and when finding a pressure increase corresponding to the hydrogen filling amount in the first prefilling in the pressure value, determining to perform the first filling control.

Fig. 1

receptacle

hydrogen
conduit

tank

tank

tank

Fig. 2

receptacle

hydrogen
conduit

tank

tank

tank

tank

tank

tank

Fig. 3

Fig. 4

Fig. 5

Fig. 6

## Fig. 7

Fig. 8

## Fig. 9

Fig. 10

56

ROM
(record
medium)
56c

CPU
56a

RAM
56b

reception
unit
56d

transmission
unit
56e

pressure
sensor

55a,55b

accumulator
51

compressor
52

movable
body

Fig. 11

S10

Start

S11
Detect connection and acquire information

S12
Perform zeroth prefilling

S13
Acquire zeroth pressure $(P1_0)$

S14
Perform first prefilling

S15
Perform second prefilling

S16
Acquire pressure after prefilling $(P1_{pre})$

S17
Carry out operation of determination

S18
One M tank system?

No

Yes

S19
Perform filling (first filling control)

S20
Perform filling (second filling control)

End

Fig. 12

Fig. 13

Europäisches
Patentamt

European
Patent Office

Office européen
des brevets

## EUROPEAN SEARCH REPORT

**Application Number**

EP 25 17 7046

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 922 902 A1 (TATSUNO CORP [JP]) 15 December 2021 (2021-12-15) * figure 4 * | 1-5 | INV. F17C5/00 F17C5/06 |
| A,P | WO 2024/202321 A1 (TOKICO SYSTEM SOLUTIONS LTD [JP]) 3 October 2024 (2024-10-03) * figures 2,3,5 * | 1-5 | |
| A,P | DE 10 2023 209743 A1 (HYUNDAI MOTOR CO LTD [KR]; KIA CORP [KR]) 24 October 2024 (2024-10-24) * paragraphs [0052] - [0059]; figure 4 * | 1-5 | |
| A | EP 4 215 797 A1 (TOYOTA MOTOR CO LTD [JP]) 26 July 2023 (2023-07-26) * figure 4 * | 1-5 | |
| A | US 2021/116073 A1 (LEE DAE NYUNG [KR] ET AL) 22 April 2021 (2021-04-22) * figures 2,3 * | 1-5 | |
| A | US 11 614 203 B2 (TOYOTA MOTOR CO LTD [JP]) 28 March 2023 (2023-03-28) * figures 1,2 * | 1-5 | TECHNICAL FIELDS SEARCHED (IPC) F17C |
| A | KR 102 531 684 B1 (KOREA AUTOMOTIVE TECH INST [KR]) 11 May 2023 (2023-05-11) * figure 3 * | 1-5 | |

The present search report has been drawn up for all claims

| Place of search | Date of completion of the search | Examiner |
|---|---|---|
| Munich | 8 October 2025 | Papagiannis, Michail |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 7046

This annex lists the patent family members relating to the patent documents cited in  the above-mentioned European search report.
The members are as contained in the European Patent Office EDP file on
The European Patent Office is in no way liable for these particulars which are merely given for the purpose of information.

08-10-2025

| Patent document cited in search report | | Publication date | Patent family member(s) | | Publication date |
|---|---|---|---|---|---|
| EP 3922902 | A1 | 15-12-2021 | CN | 113775922 A | 10-12-2021 |
| | | | EP | 3922902 A1 | 15-12-2021 |
| | | | US | 2021388947 A1 | 16-12-2021 |
| WO 2024202321 | A1 | 03-10-2024 | NONE | | |
| DE 102023209743 | A1 | 24-10-2024 | CN | 118816090 A | 22-10-2024 |
| | | | DE | 102023209743 A1 | 24-10-2024 |
| | | | KR | 20240154926 A | 28-10-2024 |
| | | | US | 2024353065 A1 | 24-10-2024 |
| EP 4215797 | A1 | 26-07-2023 | CN | 116498897 A | 28-07-2023 |
| | | | EP | 4215797 A1 | 26-07-2023 |
| | | | JP | 7484947 B2 | 16-05-2024 |
| | | | JP | 2023108244 A | 04-08-2023 |
| | | | US | 2023234453 A1 | 27-07-2023 |
| US 2021116073 | A1 | 22-04-2021 | CN | 112682689 A | 20-04-2021 |
| | | | KR | 20210045802 A | 27-04-2021 |
| | | | US | 2021116073 A1 | 22-04-2021 |
| US 11614203 | B2 | 28-03-2023 | CN | 114754284 A | 15-07-2022 |
| | | | DE | 102021131201 A1 | 14-07-2022 |
| | | | JP | 7574648 B2 | 29-10-2024 |
| | | | JP | 2022107351 A | 21-07-2022 |
| | | | US | 2022221109 A1 | 14-07-2022 |
| KR 102531684 | B1 | 11-05-2023 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2023108244 A